# EUROPEAN PATENT SPECIFICATION

(11) **EP 4 435 413 B1**
(45) Date of publication and mention of the grant of the patent: **09.12.2026**
(21) Application number: 24162432.9
(22) Date of filing: 08.03.2024
(51) Int. Cl.: G01N 21/88, G01N 21/89, G01N 21/892, G01N 21/90, G01N 21/95, B29C 65/56, B65B 57/02, B65B 61/18, G01M 3/38, B29C 45/14, B29C 45/76, B65B 57/04

(54) **A METHOD FOR DETECTING ANOMALIES IN AN OPENING DEVICE**
VERFAHREN ZUR ERKENNUNG VON ANOMALIEN IN EINER ÖFFNUNGSVORRICHTUNG
PROCÉDÉ DE DÉTECTION D'ANOMALIES DANS UN DISPOSITIF D'OUVERTURE

(30) Priority: 24.03.2023 IT 202300005640
(43) Date of publication of application: 25.09.2024
(73) Proprietor: Tetra Laval Holdings & Finance S.A., 1009 Pully (CH)
(72) Inventor: Ravazzini, Roberto, 441 23 Modena (IT); Bellucci, Lauro, 411 23 Modena (IT); Battistini, Fabrizio, 411 23 Modena (IT); Vescovo, Federico, 411 23 Modena (IT); Stagliano, Armando, 411 23 Modena (IT); Verardi, Angelo, 411 23 Modena (IT); Motti, Edoardo, 411 23 Modena (IT); Mattioli, Emanuele, 411 23 Modena (IT)
(74) Representative: Tetra Pak Patent Attorneys

(56) References cited:
- EP-A1- 1 146 312
- EP-A1- 2 418 154
- JP-A- 2002 337 254
- JP-A- 2007 170 894
- JP-A- 2021 096 141
- US-A1- 2020 391 919

## Description

### Technical Field

The invention relates generally to packaging technology. More particularly, it is related to methods and apparatuses for detecting anomalies in opening devices injection molded onto a web of packaging material.

### Background Art

Today it is common that carton packages or other similar packages made in a roll-fed packaging machine are provided with opening devices. These opening devices may be of different forms and they may be produced in different ways. By way of example, the opening devices may be screw caps, that is, opening devices comprising threaded necks and caps made to be screwed onto the necks, or pull tabs, e.g. frames attached to the packages and lids arranged to be pulled away from the frames such that openings in the packages are provided. The opening devices may be pre-applied to the web of packaging material, that is, the opening devices may be glued onto the web by using a cap applicator placed upstream a tube forming device, i.e. the opening devices may be applied before the food product are filled into the packages. As an alternative, the opening devices may be post-applied, that is, the opening devices may be applied onto the packages after these are formed. Put differently, the cap applicator is in this context placed downstream the tube forming device. For post-applied openings when used for carton packages, pre-laminated holes (PLHs) may be used. The PLHs are sections in the packaging material in which a carton layer are removed. By placing the opening devices on top of the PLHs, the opening devices function as light blocking elements instead of the carton layer, and by having the carton layer removed it is facilitated for cutting elements of the opening devices to penetrate the packaging material during opening of the packages.

Instead of having the opening devices pre-applied or post-applied, the opening devices can be injection molded onto the web by using a molding arrangement comprising a first and a second mould. Put differently, instead of having the opening devices produced elsewhere and attached to the packages in the packaging machine, the opening devices may be produced and attached at the same time in the packaging machine. When using this approach, the opening devices can be formed by clamping the web between the first and second mould and inject melted plastic into a cavity formed by the moulding arrangement. The arrangement and the plastic injection may be arranged such that the web is penetrated, that is, the melted plastic is pushed through the web during the moulding. An advantage with penetrating the web during the moulding is that the packaging material is weakened. This comes with the positive effect that less force is required during opening, but also in that tearing of the packaging material during the opening can be controlled more accurately.

Several techniques for injection molding opening devices in packaging machines, sometimes referred to as filling machines, have been developed. For instance, it has been developed techniques for rapidly injection molding opening devices. Further, it has been developed techniques for forming a slack of packaging material before as well as after the injection molding station such that an indexed movement can be achieved for the injection molding station even though other stations of the packaging machines are arranged to handle the web continuously. Still further, it has been developed techniques such that the amount of plastic needed can be reduced, in turn improving the environmental footprint.

Even though different techniques for providing injection molding of opening devices onto the web of packaging material have been developed, there is a need for reliable quality assessment of the opening devices to assure that these meet quality requirements. For instance, by quality assessing the opening devices it can be assured that the injection moulding of the opening devices has not compromised the package integrity.

### Summary

It is an object of the invention to at least partly overcome one or more of the above-identified limitations of the prior art. In particular, it is an object to provide a reliable quality assessment of injection molded opening devices on a web of packaging material.

Generally, by having a light source placed on a first side of the web and a camera, or other image capturing device, placed on a second side of the web, light passing through the web and the opening devices can be captured by the camera. Since different parts of the opening devices differ in transparency, it has proven reliable to quality assess the opening devices in this manner.

Further background art can be found in EP2418154A1, which discloses a method and unit for detecting the effective position of an opening device applied onto a sealed package, utilizing sensors to ensure accurate placement relative to the package's removable portion. Additionally, JP2007170894 describes a device and method for inspecting the sealing state of packaging that allows for non-destructive testing without the need for incision, using electrodes to detect current flow for assessing seal integrity. Moreover, EP1146312A1 presents an apparatus for measuring the heat-seal position of plastic film, employing light sources and optical sensors to detect and ensure the quality of heat-sealed areas in plastic packaging.

According to a first aspect, as defined in claim 1, it is provided a method for detecting anomalies in an opening device on a web of packaging material, wherein the opening device is injection molded onto the web in an injection molding station. The method comprises illuminating, by a light source, a first side of the web of packaging material, at a position of the opening device; capturing, by an image data capturing device, image data depicting the opening device from a second side of the web, the second side being opposite from the first side; identifying, in the image data, data indicative of an anomaly; and communicating, in response to the anomaly being identified, a notification signal comprising information indicative of the anomaly to a quality control station.

As explained above, by using that a backlit system in this setting provides information about light transmission as well as spatial information, the anomalies, e.g. deviations from reference values, may be identified efficiently and reliably.

The light source may be a first light source, and the step of illuminating may further comprise illuminating, by a second light source, the second side of the web of packaging material, at the position of the opening device.

By having two light sources, one light source placed on the other side of the web with respect to the image capturing device and another light source placed on the same side as the image capturing device, anomalies resulting in a change of light transmission, such as holes, cracks, impurities and carbonized particles, can be detected by taking into account the light emitted from the first light source, while anomalies resulting in a spatial change, such as over- and under-filled regions of the opening device, may be captured by using the light emitted by the second light source. Thus, a set-up using both light sources can be used for detecting a wide range of anomalies.

The method may further comprise: storing the data indicative of the anomaly; and/or transmitting the data indicative of the anomaly to a remote server.

An advantage with this is that data from a plurality of different packaging systems can be collected and analyzed, thereby allowing anomalies to be detected using neural networks or other machine learning approaches.

The method may further comprise determining an action to be performed based on the data indicative of the anomaly; wherein the notification signal may further indicate the action to be performed.

The anomaly detected may result in that packages should be removed at a later stage such that for instance packages having opening devices with holes are not provided to consumers. However, in addition or as an alternative, the anomaly detected may also be used for determining an action to be performed, e.g. reducing temperature in the moulding arrangement. Put differently, the detection of anomalies may be used as input for improving the control of the packaging system.

The development of anomalies over time may also be used for determining actions to be performed. For instance, a minor deviation may in itself not be considered severe enough to render a mitigating action, but in case the deviation is worsening over time such mitigating action may still be instigated in case the development is suggesting that the anomaly is successively becoming worse.

The anomaly identified may be a crack or a hole, and the anomaly may be identified as a region in the image data having an intensity exceeding a first threshold value.

By using a backlit web, i.e. having the light source on the second side and the image capturing device on the first side of the web, holes in the opening device will occur as bright spots due to that there is no plastic material obstructing the light.

The method further comprise determining a position of the detected anomaly, in relation to the membrane of the opening device; wherein the notification signal may further indicate the determined position of the detected anomaly.

For instance, a black spot, i.e. carbonized particle, in the membrane may constitute a higher risk from a package integrity perspective compared to having the black spot outside the membrane, thus including the position of the anomaly and not only the mere presence of the anomaly may provide for a more robust quality control.

The method may further comprise determining an estimated thickness of a membrane of the opening device based on a greyscale of the image data, wherein the membrane may be a weakening line defining a periphery of a main center portion of the opening device; wherein the notification signal may further indicate the estimated thickness of the membrane.

Since the amount of light passing through the membrane depends on the thickness, having a backlit set up comes with the advantage that the greyscale may be used for quantifying the thickness and hence detecting deviations related to the thickness.

The main center portion may be defined by the membrane, wherein the membrane may be formed by a first mould of a mould arrangement, and an inner center portion may be defined by a recess, wherein the recess may be formed by a second mould of the mould arrangement, wherein the anomaly may be identified as a deviation of a placement of the membrane with respect to a placement of the recess compared to a reference placement of the membrane with respect to a reference placement of the recess.

Since the moulds used for forming the opening device may provide different features of the opening device, the placement of these features in the opening device may be used for assessing whether or not the moulds are aligned correctly. By way of example, the placement of the membrane provided by one of the moulds and the placement of the recess provided by another mould may be used for determining whether or not the moulds are aligned correctly.

The image data capturing device may be provided with a polarized filer and/or the light source may be configured to emit polarized light.

An advantage with using polarized light is that the impact of stray light can be reduced. Further, even in the case with a controlled light environment, that is, no or virtually no stray light, the use of the polarized filter and/or having the light source arranged to emit polarized light, an increased image capturing stability can be achieved by using polarized light since the light environment is further controlled. If having the polarized filter and the light source configured to emit polarized light, it may also be possible to detect anomalies related to that the polarization of the light is affected when being transmitted through the plastic material of the opening device.

The image data may be associated with a package to be formed, and communicating the notification signal may further comprise communicating a package identifier of the package associated with the image data.

An advantage with having the package identifier, also referred to as package ID, e.g. QR code or Data Matrix code, is that the anomaly detected in the opening device provided in the web, before this is transformed into packages, may be linked to the package identifier such that the package can be discarded once this is produced. By allowing the package to be produced, the downtime of the packaging system can be reduced, which in turn results in less food waste as well as less production costs.

The anomaly identified may be a carbonized particle, and the anomaly may be identified as a region in the image data having an intensity below a second threshold value.

Carbonized particles have different light transmission properties compared to the plastic material which provides for that these may be spotted easily when having the backlit set up as suggested herein.

Once the web of packaging material is formed into packages, the first side may be arranged to face a surrounding environment and the second side may be arranged to face a food product held inside the packages.

The opening device may comprise the membrane defining the periphery of the main center portion, and the notification signal may comprise information indicative of whether the anomaly originates from the membrane and/or the main center portion.

The anomaly identified may be a displacement of a peripheral edge of an inside flange of the opening device.

In case too much or too little plastic material is injected during the moulding, this may result in that the peripheral edge is affected. Since this may be detectable in the image data, it is hence possible to detect a wide range of anomalies related to the moulding at the same time.

According to a second aspect, as defined in claim 14, it is provided a kit of parts for detecting anomalies in an opening device on a web of packaging material, wherein the opening device is injection molded onto the web in an injection molding station, said kit of parts comprising a light source configured to emit light passing through the opening device, an image capturing device configured to capture the light passing through the opening device and, based on the captured light, generate image data depicting the opening device, and a data processing device, comprising a processor, a memory and a transceiver, configured to identify, in the image data, data indicative of an anomaly according to the method for detecting anomalies in any of the claims 1-13, anc to communicate, in response to the anomaly being identified, a notification signal comprising information indicative of the anomaly to a quality control station.

The same features and advantages presented above with respect to the first aspect also apply for this second aspect.

According to a third aspect, as defined in claim 15, it is provided a data processing device, comprising a control circuitry, configured to receive image data depicting an injection molded opening device, wherein the image data is generated by capturing light passing through the injection molded opening device according to the method for detecting anomalies in any of claims 1-13, identify, in the image data, data indicative of an anomaly of the opening device, and communicate, in response to the anomaly being identified, a notification signal comprising information indicative of the anomaly to a quality control station.

The same features and advantages presented above with respect to the first aspect also apply to this aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a flowchart illustrating a method for detecting anomalies in an opening device on a web.
Fig. 2 illustrates a data processing device.
Fig. 3 generally illustrates a packaging system comprising an injection moulding station for producing opening devices, and an image capturing device and a light source for quality assessing the opening devices.
Fig. 4A illustrates by way of example a perspective view of an injection molded opening device.
Fig. 4B illustrates by way of example a cross-sectional view of an opening device injection molded onto a web.
Fig. 5 illustrates by way of example an opening device, seen from the second side, i.e. an inside of a package, wherein a hole is detected in a membrane of the opening device.
Fig. 6A and 6B both illustrate by way of example opening devices in which so-called black spots, i.e. carbonized particles, are detected.
Fig. 7A and 7B both illustrate by way of example opening devices in which over-filled regions are detected.
Fig. 8A and 8B both illustrate by way of example opening devices in which under-filled regions are detected.

### Detailed Description

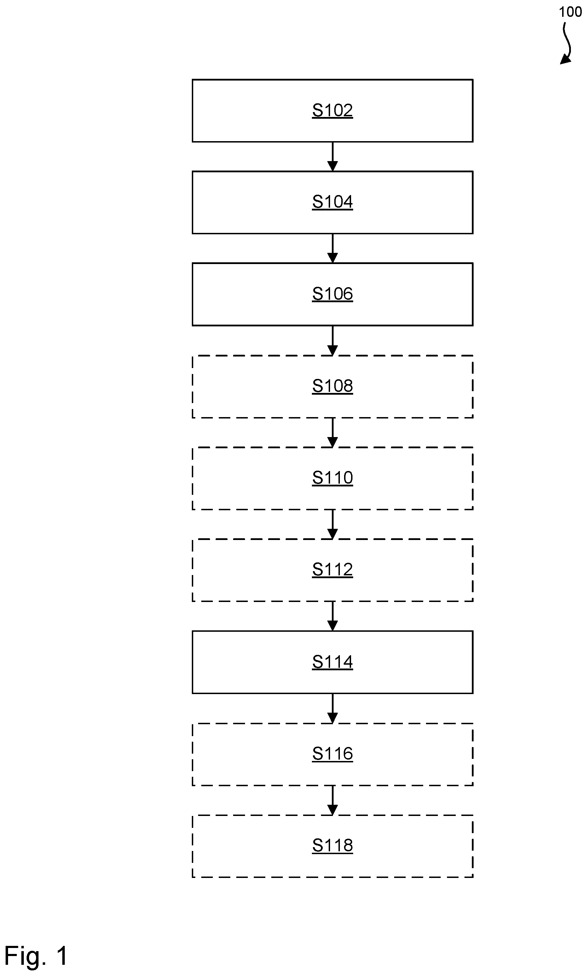

With reference to Fig. 1, a flowchart for a method 100 for detecting anomalies in an opening device is illustrated. The opening device may be injection molded onto a web of packaging material. The method may comprise illuminating S102 a first side of the web by using a light source. Further, the method may comprise capturing S104 image data depicting the opening device from a second side of the web, wherein the second side is opposite the first side. The method may further comprise identifying S106 data indicative of an anomaly, and communicating S114 a notification signal comprising information indicative of the anomaly to a quality control station.

Optionally, the method may comprise determining S108 an action to be performed based on the data indicative of the anomaly.

In addition, also optional, the method may comprise determining S110 a position of the detected anomaly in relation to a membrane of the opening device. The notification signal may further indicate the determined position of the detected anomaly.

Further, also optional, the method may comprise determining S112 an estimated thickness of the membrane of the opening device based on a greyscale of the image data, wherein the membrane may be a weakening line defining a main center portion of the opening device.

In addition, also optional, the method may comprise storing S116 the data indicative of the anomaly, and/or transmitting S118 the data indicative of the anomaly to a remote server.

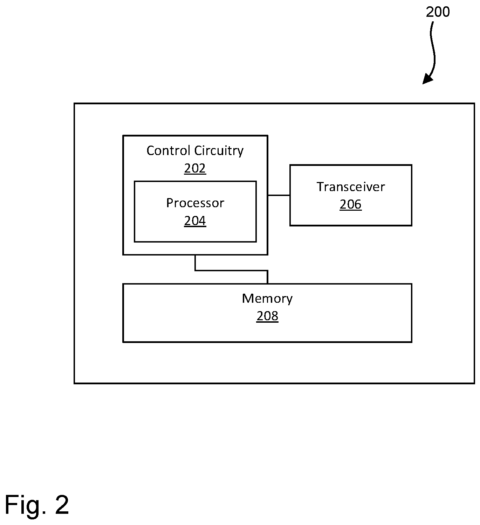

Fig. 2 illustrates a data processing device 200 comprising a control circuitry 202 in turn comprising a processor 204. Communicatively connected to the control circuitry 202, a transceiver 206 and a memory 208 may be provided. In the memory 208, computer program instructions for performing the method 100 illustrated in fig. 1 may be provided. Put differently, the data processing device 200 may be arranged to process the image data captured by the image capturing device such that the anomalies can be identified.

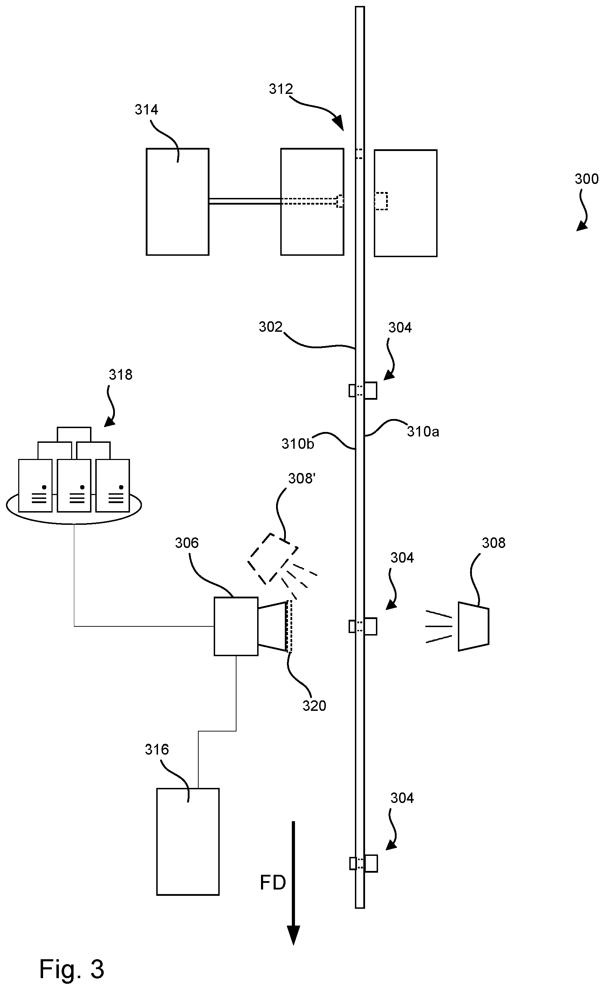

Fig. 3 schematically illustrates part of a packaging system 300, sometimes referred to as a packaging machine or a filling machine. Even though not illustrated, the web 302 of packaging material may be provided to the packaging system 300 on a reel. After being unwound from the reel, the web 302 may be fed to an injection molding station 312 comprising a moulding arrangement, in turn comprising a first and a second mould placed on different sides of the web 302. As illustrated, plastic granules may be fed into the injection moulding station 312 via a plastic granules hopper 314. The opening devices 304 produced by the injection moulding station 312 may be fed in a feeding direction FD to an image data capturing device 306 and a light source 308. As illustrated, the light source 308 and the image data capturing device 306, e.g. a camera, may be placed on different sides of the web 302 such that light emitted from the light source 308 can pass through the web 302 and/or the opening device 304 into the image data capturing device. As illustrated, the light source 308 may be arranged such the light is emitted onto a first side 310a of the web 302, and the image data capturing device 306 may be placed such that this faces a second side 310b of the web 302. The first side 310a may be arranged to form an outside of the package at a later stage and the second side 310b may be arranged to form an inside of the package, i.e. the first side 310a may be arranged to face a surrounding environment and the second side 310b may be arranged to face a food product held inside the package.

Downstream the image data capturing device 306 and the light source 308, a quality control station 316 may be provided. As illustrated, the quality control station 316 may be arranged to assess the web 302 and the opening devices 304 in further detail, but it may also be placed further downstream. For instance, the quality control station 316 may be placed after the packages have been formed. In such a case, the quality control station 316 may be arranged to remove packages not fulfilling quality standards. Possible reasons for not fulfilling the quality standards, i.e. quality requirements, may include that holes are detected in the opening devices, that a thickness of the opening devices are not within set intervals, that a shape of the opening devices deviate from a reference shape, etc. The quality control station 316 may also be arranged to make more detailed analysis. For instance, the quality control station 316 may also include an image data capturing device, but with a higher resolution than the image data capturing device 306. An advantage with such set up is that the image data capturing device 306 placed upstream the quality control station 316 can trigger the image data capturing device of the quality control station 316. In this way, the image data capturing device of the quality control station 316 can be used only for assessing the opening devices 304 in which further details are needed for making a reliable assessment.

Even though not illustrated, the quality control station 316 may also be placed downstream the packaging system 300, that is, the quality control station 316 may assess the packages and the opening devices 304 of the packages after these are produced and transferred from the packaging system 300. To be able to trace the opening devices 304 after the web 302 has been formed into packages, that is, sealed, filled and formed into individual packages, the web 302 may be provided with package identifiers, such as Data Matrix codes or QR codes. By having the web 302 marked in this way such that the packages formed are provided with package identifiers, the quality control station 316 can be arranged to assess the packages also after these are fed out from the packaging system 300 and even shipped to a retailer or similar.

The quality control station 316 may be an automatic station performing different steps for assessing the packages, and/or discarding packages deemed not to fulfill the quality requirements. Another option is that the quality control station 316 is a manual or semi-automatic quality control station in which an operator is involved in making a more detailed assessment and/or discarding the packages.

In response to an anomaly detected in the opening device 304 a notification signal may be triggered and transmitted from the image data capturing device 306 to the quality control station 316. The notification signal may include information on an action to be performed. For instance, the notification signal may include an instruction to the quality control station to select a specific package for further analysis. Another action may be to discard the package. Still another action may be to change settings of the packaging system 300, e.g. increase amount of plastic to be fed into the cavity in the moulding arrangement.

An advantage of having the light source 308 and the image capturing device 306 placed on opposite sides of the web 302 is that quality issues of the opening devices 304 may be linked to deviations in a moulding process of the opening devices. These deviations may result in that form and/or thickness of the opening devices 304 differ from set point values. By having the light source 308 placed such that light is transmitted through the web and/or the opening devices and into the image data capturing device 306 and having the plastics of the opening devices 304 allowing part of the light to pass, the image data generated by the image data capturing device 306 may serve as a reliable source of information for assessing a quality of the opening devices 304.

As described above, the image data may be generated as well as processed by the image data capturing device 306. Put differently, the image data capturing device 306 may comprise the data processing device 200 illustrated in fig. 2. The data processing device 200 may also be a separate unit. Further, the processing of the image data may also be processed in a remote server 318 directly or indirectly communicatively connected to the image data capturing device 306. The remote server 318 may transfer the notification signal back to the image data capturing device 306 such that this thereafter can be transferred to the quality control station 316. Another option, even though not illustrated, is that the remote server 318 is communicatively connected also to the quality control station 316 such that the notification signal can be transmitted directly to the quality control station 316 without passing the image data capturing device 306. The remote server 3168 may be connected to several image data capturing devices 306 and also to several different packaging systems 300. An advantage with collecting data from a large base of image data capturing devices 306 is that machine learning models, such as neural networks, can be used for generating associations between image data sets and anomalies, and also links between anomalies and actions.

As illustrated, the light source 308, in this context referred to as a first light source 308, may be complemented by a second light source 308'. Unlike the first light source 308, the second light source 308' may be placed on the same side of the web 302 as the image data capturing device 306. By having the first light source 308 arranged to provide light that is passing through the web 302 and/or the opening devices 304 and having the second light source 308' for providing light that is reflected on the opening device 304 before being registered by the image data capturing device 306, more information about the geometry of the opening device 304 can be obtained. The two light sources 308, 308' may be arranged to provide light intermittently, that is, the opening device 304 is alternately illuminated by the first and second light source 308, 308', or the light sources 308, 308' may be arranged to provide light at the same time. The light sources 308, 308' may use the same frequency or the light sources 308, 308' may be arranged to use different frequencies.

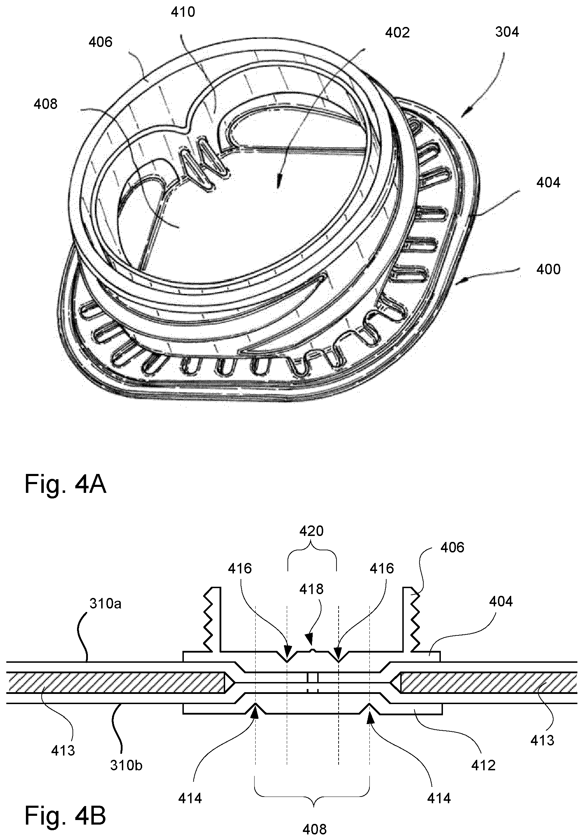

By way of example, Fig. 4A illustrates a perspective view of the opening device 304. The example illustrated comprises a spout 400 that may be arranged to face outwards from the web 302. Inside the spout 400, an opening 402 can be provided. An outside flange 404 may be provided radially outside a neck portion 406. The neck portion may be threaded such that this can interact with a screw cap. Radially inside the neck portion 406 and substantially on the same level as the outside flange 404, a main center portion 408 may be provided. This portion 408 may be arranged to be removed during opening of the package. For instance, even though not illustrated, a pull-tab may be provided for facilitating for a user to remove this portion. Another option is that that the screw cap is provided with cutting functionality such that this portion is at least partly cut off during opening, in this context unscrewing the cap. The neck portion 408 may from above form a ring 410.

Fig. 4B illustrates a cross-sectional view of another example of the opening device 304. As illustrated, as the example illustrated in fig. 4A, the neck portion 406, the outside flange 404 and the main center portion 408 are provided. As illustrated, opposite to the outside flange 404, on the other side of the web 302, an inside flange 412 can be provided. By having these two flanges and also having the plastic material penetrating the web 302 during the moulding process, the opening device 304 can be secured to the web 302 without compromising package integrity. As illustrated, the web 302 may be provided with a pre-laminated hole (PLH), that is, a section of the web 302 not having any carton layer 413. According to the example illustrated, during the moulding, the plastic material may penetrate the web 302 in the PLH. As an alternative to having the PLH, the web may be provided with a number of small holes, i.e. holes provided by a needle or similar tool, wherein the small holes are smaller in size compared to the PLH, such that the plastic material can penetrate the web 302 via these small holes. The small holes can be provided along a tearing line such that opening the opening device 304 along the tearing line is facilitated.

As illustrated, a periphery of the main center portion 408 may be defined by a weakening line, also referred to as membrane 414. When having the main center portion 408 removed during the opening of the opening device 304, the main center portion 408 may be torn off, either in full or in part, along the membrane 414. As illustrated, the membrane 414 may be placed on the second side 310b, that is, facing the food product once the package is filled and formed.

On the first side 310a, opposite to the second side 310b, a recess 416 may be provided. As illustrated, a radius of the recess 416 may be less than a radius of the membrane 414. Radially inside the recess 416, an inner center portion 420 can be provided. Within this portion, a nozzle tip protrusion 418 may be provided. This protrusion may arise from the plastic material injected during the moulding. In case there are excessive plastic material provided during the moulding, this may be captured in the recess 416. In this way the recess 416 can serve the function of compensating for that excessive plastic material is being used. This in combination with that the light source 308 and the image capturing device 306 is placed on opposite sides of the web 302 provides for that in case excessive plastic material is captured in the recess 416, this may be identified as an anomaly by using the light source 308 and the image data capturing device 306 arranged as illustrated in fig. 3.

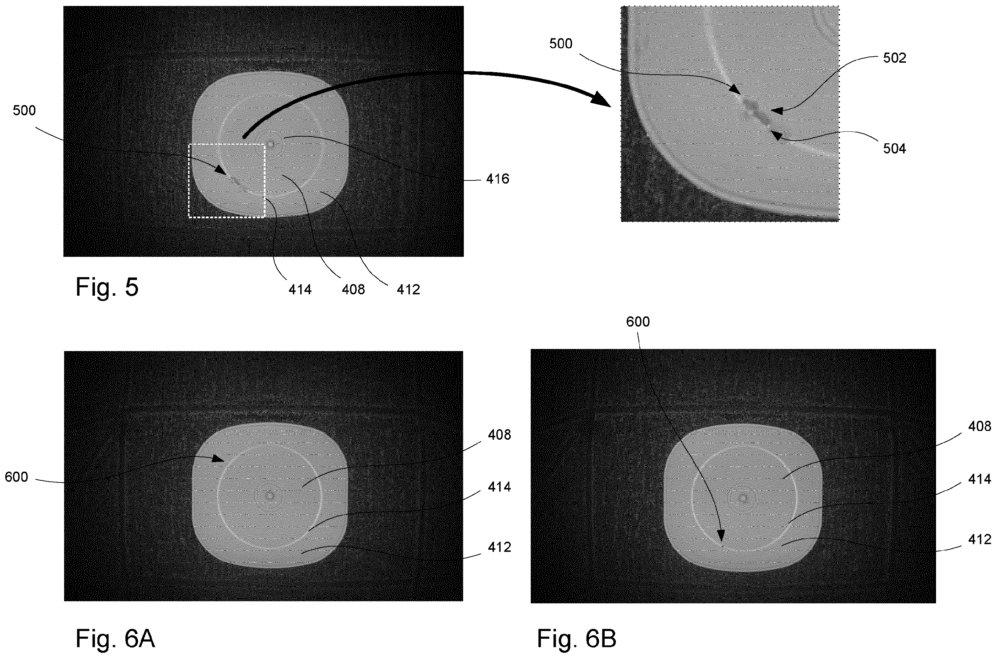

Fig. 5 illustrates an example of image data, depicting the opening device 304, in which an anomaly 500 is identified. As further illustrated in the zoomed in section, the anomaly 500 detected in this particular example comprises impurities 502, illustrated as dark grey objects, and a hole 504, illustrated as a white spot. Generally, in case white light is emitted from the light source 308, the hole 504 will be depicted as the white spot, while in case impurities 502 have found its way into the moulding arrangement these may absorb light more effectively than the opening device 304, hence the darker shade of grey compared to the colour of the opening device.

As illustrated in fig. 5, the membrane 414 and the recess 416 are both visible in the image data even though these originate from different moulds. As illustrated in fig. 4B, the recess 416 may be provided by one of two moulds interacting with the first side 310a (two moulds may be needed to provide threads on the spout) and the membrane may be provided by a mould interacting with the second side 310b of the web 302. In case a relative placement of the recess 416 and the membrane 414 is found to deviate over time or with respect to reference placements, this may be detected as an anomaly indicating that the moulds in the mould arrangement are misaligned.

Fig. 6A and 6B illustrate examples of image data, depicting the opening device 304, in which the anomaly is a carbonized particle 600, sometimes referred to as a black spot. In injection molding applications, black spots may occur for different reasons, e.g. black spots may occur because the plastic material was overheated during moulding.

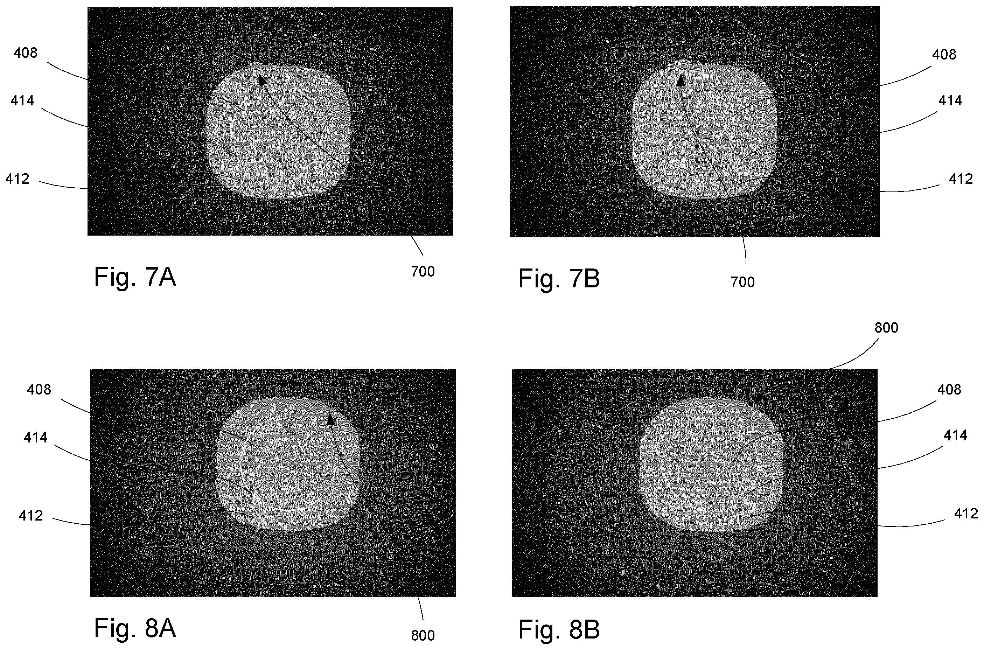

Fig. 7A and 7B illustrate examples of image data in which the anomaly is an over-filled region 700. As illustrated, a peripheral edge of the inside flange 412 has been displaced, more particularly plastic material has been pushed outside the inside flange 412. In case such anomaly is identified, the mitigating action may be to lower the amount of plastic material used for moulding the opening device 304.

Fig. 8A and 8B illustrate examples of image data in which the anomaly is an under-filled region 800. On the contrary to the situation illustrated in fig. 7A and 7B, the peripheral edge is displaced in that part of the inside flange 412 is missing. In this case, the mitigating action may be to increase the amount of plastic material used for moulding the opening device 304.

From the description above follows that, although various embodiments of the invention have been described and shown, the invention is not restricted thereto, but may also be embodied in other ways within the scope of the subject-matter defined in the following claims.

## Claims

1. A method (100) for detecting anomalies in an opening device (304) on a web (302) of packaging material, wherein the opening device (304) is injection molded onto the web in an injection molding station (312), the method (100) comprising:
illuminating (S102), by a light source (308), a first side (310a) of the web (302) of packaging material, at a position of the opening device (304);
capturing (S104), by an image data capturing device (306), image data depicting the opening device (304) from a second side (310b) of the web (302), the second side (310b) being opposite from the first side (310a);
identifying (S106), in the image data, data indicative of an anomaly; and
communicating (S114), in response to the anomaly being identified, a notification signal comprising information indicative of the anomaly to a quality control station (316).

2. The method (100) according to claim 1, wherein the light source (308) is a first light source (308), and
wherein the step of illuminating (S102) further comprises illuminating, by a second light source (308'), the second side (310b) of the web (302) of packaging material, at the position of the opening device (304).

3. The method (100) according to claim 1 or 2, further comprising:
storing (S116) the data indicative of the anomaly; and/or
transmitting (S118) the data indicative of the anomaly to a remote server (318).

4. The method (100) according to any one of the claims 1 to 3, further comprising determining (S108) an action to be performed, based on the data indicative of the anomaly;
wherein the notification signal further indicates the action to be performed.

5. The method (100) according to any one of the claims 1 to 4, wherein the anomaly identified is a crack or a hole (504), and the anomaly is identified as a region in the image data having an intensity exceeding a first threshold value.

6. The method (100) according to any one of the claims 1 to 5, further comprising determining (S110) a position of the detected anomaly, in relation to the membrane of the opening device (304);
wherein the notification signal further indicates the determined position of the detected anomaly.

7. The method (100) according to any one of the claims 1 to 6, further comprising determining (S112) an estimated thickness of a membrane (414) of the opening device (304) based on a greyscale of the image data, wherein the membrane (414) is a weakening line defining a periphery of a main center portion (408) of the opening device (304);
wherein the notification signal further indicates the estimated thickness of the membrane (414).

8. The method (100) according to any one of the claims 1 to 7, wherein the main center portion (408) is defined by the membrane (414), wherein the membrane (414) is formed by a first mould of a mould arrangement, and an inner center portion (420) is defined by a recess (416), wherein the recess (416) is formed by a second mould of the mould arrangement, wherein the anomaly is identified as a deviation of a placement of the membrane (414) with respect to a placement of the recess (416) compared to a reference placement of the membrane (414) with respect to a reference placement of the recess (416).

9. The method (100) according to any of the claims 1 to 8, wherein the image data is associated with a package to be formed, and
wherein communicating (S114) the notification signal further comprises communicating a package identifier of the package associated with the image data.

10. The method (100) according to any one of the claims 1 to 9, wherein the anomaly identified is a carbonized particle, and the anomaly is identified as a region in the image data having an intensity below a second threshold value.

11. The method (100) according to any one of the claims 1 to 10, wherein, once the web of packaging material (302) is formed into packages, the first side (310a) is arranged to face a surrounding environment and the second side (310b) is arranged to face a food product held inside the packages.

12. The method (100) according to any one of the claims 1 to 11, wherein the opening device (304) comprises the membrane (414) defining the periphery of the main center portion (408) , and wherein the notification signal comprises information indicative of whether the anomaly originates from the membrane (414) and/or the main center portion (408).

13. The method (100) according to any one of the claim 1 to 12, wherein the anomaly identified is a displacement of a peripheral edge of an inside flange (412) of the opening device (304).

14. A kit of parts for detecting anomalies in an injection molded opening device (304) on a web (302) of packaging material, wherein the opening device (304) is injection molded onto the web in an injection molding station (312), said kit of parts comprising
a light source (308) configured to emit light passing through the opening device (304),
an image capturing device (306) configured to capture the light passing through the opening device (304) and, based on the captured light, generate image data depicting the opening device , and
a data processing device (200), comprising a processor (204), a memory (208) and a transceiver (206), configured to identify, in the image data, data indicative of an anomaly according to the method for detecting anomalies in any of the claims 1-13, and to communicate, in response to the anomaly being identified, a notification signal comprising information indicative of the anomaly to a quality control station (316).

15. A data processing device (200), comprising a control circuitry (202), configured to
receive image data depicting an injection molded opening device (304), wherein the image data is generated by capturing light passing through the injection molded opening device (304) according to the method for detecting anomalies in any of claims 1-13,
identify, in the image data, data indicative of an anomaly of the opening device (304), and
communicate, in response to the anomaly being identified, a notification signal comprising information indicative of the anomaly to a quality control station (316).

## Patentansprüche

1. Verfahren (100) zur Erkennung von Anomalien in einer Öffnungsvorrichtung (304) auf einer Bahn (302) aus Verpackungsmaterial, wobei die Öffnungsvorrichtung (304) in einer Spritzgießstation (312) auf die Bahn spritzgegossen wird, wobei das Verfahren (100) Folgendes umfasst:
Beleuchten (S102) einer ersten Seite (310a) der Bahn (302) aus Verpackungsmaterial an einer Position der Öffnungsvorrichtung (304) durch eine Lichtquelle (308);
Erfassen (S104) von Bilddaten durch eine Bilddatenerfassungsvorrichtung (306), die die Öffnungsvorrichtung (304) von einer zweiten Seite (310b) der Bahn (302) darstellen, wobei die zweite Seite (310b) der ersten Seite (310a) gegenüberliegt;
Identifizieren (S106) von Daten, die eine Anomalie angeben, in den Bilddaten; und
Kommunizieren (S114) eines Benachrichtigungssignals, das Informationen umfasst, die die Anomalie angeben, an eine Qualitätskontrollstation (316) in Reaktion darauf, dass die Anomalie identifiziert wird.

2. Verfahren (100) nach Anspruch 1, wobei die Lichtquelle (308) eine erste Lichtquelle (308) ist, und wobei der Schritt des Beleuchtens (S102) ferner Beleuchten der zweiten Seite (310b) der Bahn (302) aus Verpackungsmaterial an der Position der Öffnungsvorrichtung (304) durch eine zweite Lichtquelle (308') umfasst.

3. Verfahren (100) nach Anspruch 1 oder 2, ferner umfassend:
Speichern (S116) der Daten, die die Anomalie angeben; und/oder
Senden (S118) der Daten, die die Anomalie angeben, an einen entfernten Server (318).

4. Verfahren (100) nach einem der Ansprüche 1 bis 3, ferner umfassend Bestimmen (S108) einer durchzuführenden Aktion basierend auf den Daten, die die Anomalie angeben; wobei das Benachrichtigungssignal ferner die durchzuführende Aktion angibt.

5. Verfahren (100) nach einem der Ansprüche 1 bis 4, wobei die identifizierte Anomalie ein Riss oder ein Loch (504) ist und die Anomalie als ein Bereich in den Bilddaten mit einer Intensität identifiziert wird, die einen ersten Schwellenwert überschreitet.

6. Verfahren (100) nach einem der Ansprüche 1 bis 5, ferner umfassend Bestimmen (S110) einer Position der erkannten Anomalie in Bezug auf die Membran der Öffnungsvorrichtung (304);
wobei das Benachrichtigungssignal ferner die bestimmte Position der erkannten Anomalie angibt.

7. Verfahren (100) nach einem der Ansprüche 1 bis 6, ferner umfassend Bestimmen (S112) einer geschätzten Dicke einer Membran (414) der Öffnungsvorrichtung (304) basierend auf einer Graustufe der Bilddaten, wobei die Membran (414) eine Schwächungslinie ist, die einen Umfang eines Hauptmittelabschnitts (408) der Öffnungsvorrichtung (304) definiert;
wobei das Benachrichtigungssignal ferner die geschätzte Dicke der Membran (414) angibt.

8. Verfahren (100) nach einem der Ansprüche 1 bis 7, wobei der Hauptmittelabschnitt (408) durch die Membran (414) definiert wird, wobei die Membran (414) durch eine erste Form einer Formanordnung gebildet wird und ein innerer Mittelabschnitt (420) durch eine Aussparung (416) definiert wird, wobei die Aussparung (416) durch eine zweite Form der Formanordnung gebildet wird, wobei die Anomalie als eine Abweichung einer Platzierung der Membran (414) in Bezug auf eine Platzierung der Aussparung (416) im Vergleich zu einer Referenzplatzierung der Membran (414) in Bezug auf eine Referenzplatzierung der Aussparung (416) identifiziert wird.

9. Verfahren (100) nach einem der Ansprüche 1 bis 8, wobei die Bilddaten mit einer zu bildenden Packung assoziiert sind, und
wobei das Kommunizieren (S114) des Benachrichtigungssignals ferner Kommunizieren einer Packungskennung der mit den Bilddaten assoziierten Packung umfasst.

10. Verfahren (100) nach einem der Ansprüche 1 bis 9, wobei die identifizierte Anomalie ein verkohltes Partikel ist und die Anomalie als ein Bereich in den Bilddaten mit einer Intensität unter einem zweiten Schwellenwert identifiziert wird.

11. Verfahren (100) nach einem der Ansprüche 1 bis 10, wobei, sobald die Bahn aus Verpackungsmaterial (302) zu Packungen ausgebildet ist, die erste Seite (310a) so angeordnet ist, dass sie einer umliegenden Umgebung zugewandt ist, und die zweite Seite (310b) so angeordnet ist, dass sie einem in den Packungen enthaltenen Lebensmittelprodukt zugewandt ist.

12. Verfahren (100) nach einem der Ansprüche 1 bis 11, wobei die Öffnungsvorrichtung (304) die Membran (414) umfasst, die den Umfang des Hauptmittelabschnitts (408) definiert, und wobei das Benachrichtigungssignal Informationen umfasst, die angeben, ob die Anomalie von der Membran (414) und/oder dem Hauptmittelabschnitt (408) ausgeht.

13. Verfahren (100) nach einem der Ansprüche 1 bis 12, wobei die identifizierte Anomalie eine Verschiebung einer Umfangskante eines inneren Flansches (412) der Öffnungsvorrichtung (304) ist.

14. Teilesatz zum Erkennen von Anomalien in einer spritzgegossenen Öffnungsvorrichtung (304) auf einer Bahn (302) aus Verpackungsmaterial, wobei die Öffnungsvorrichtung (304) in einer Spritzgießstation (312) auf die Bahn spritzgegossen wird, wobei der Teilesatz Folgendes umfasst:
eine Lichtquelle (308), die dazu ausgelegt ist, Licht zu emittieren, das durch die Öffnungsvorrichtung (304) hindurchtritt,
eine Bilderfassungsvorrichtung (306), die dazu ausgelegt ist, das Licht, das durch die Öffnungsvorrichtung (304) hindurchtritt, zu erfassen und basierend auf dem erfassten Licht Bilddaten zu erzeugen, die die Öffnungsvorrichtung darstellen, und
eine Datenverarbeitungsvorrichtung (200), die einen Prozessor (204), einen Speicher (208) und einen Sendeempfänger (206) umfasst und die dazu ausgelegt ist, Daten, die eine Anomalie angeben, gemäß dem Verfahren zur Erkennung von Anomalien nach einem der Ansprüche 1-13 in den Bilddaten zu identifizieren und in Reaktion darauf, dass die Anomalie identifiziert wird, ein Benachrichtigungssignal, das Informationen umfasst, die die Anomalie angeben, an eine Qualitätskontrollstation (316) zu kommunizieren.

15. Datenverarbeitungsvorrichtung (200), die eine Steuerschaltungsanordnung (202) umfasst und zu Folgendem ausgelegt ist:
Empfangen von Bilddaten, die eine spritzgegossene Öffnungsvorrichtung (304) darstellen, wobei die Bilddaten erzeugt werden, indem Licht, das durch die spritzgegossene Öffnungsvorrichtung (304) hindurchtritt, gemäß dem Verfahren zum Detektieren von Anomalien in einem der Ansprüche 1-13 erfasst wird,
Identifizieren von Daten, die eine Anomalie der Öffnungsvorrichtung (304) angeben, in den Bilddaten und Kommunizieren eines Benachrichtigungssignals, das Informationen umfasst, die die Anomalie angeben, an eine Qualitätskontrollstation (316) in Reaktion darauf, dass die Anomalie identifiziert wird.

## Revendications

1. Procédé (100) de détection d'anomalies dans un dispositif d'ouverture (304) sur une bande (302) de matériau d'emballage, dans lequel le dispositif d'ouverture (304) est moulé par injection sur la bande dans un poste de moulage par injection (312), le procédé (100) comprenant :
Éclairer (S102), par une source lumineuse (308), un premier côté (310a) de la bande (302) de matériau d'emballage, au niveau d'une position du dispositif d'ouverture (304) ;
Capture (S104), par un dispositif de capture de données d'image (306), de données d'image représentant le dispositif d'ouverture (304) à partir d'un deuxième côté (310b) de la bande (302), le deuxième côté (310b) étant opposé au premier côté (310a) ;
Identifier (S106), dans les données d'image, des données indiquant une anomalie ; et
La présente invention concerne la communication (S114), en réponse à l'anomalie identifiée, d'un signal de notification comprenant des informations indiquant l'anomalie à une station de contrôle de qualité (316).

2. Procédé (100) selon la revendication 1, dans lequel la source de lumière (308) est une première source de lumière (308), et
Dans lequel l'étape d'éclairage (S102) comprend en outre l'éclairage, par une deuxième source lumineuse (308'), du deuxième côté (310b) de la bande (302) de matériau d'emballage, au niveau de la position du dispositif d'ouverture (304).

3. Procédé (100) selon la revendication 1 ou 2, comprenant en outre
Stocker (S116) les données indicatives de l'anomalie ; et/ou
Transmettre (S118) les données indicatives de l'anomalie à un serveur distant (318).

4. Procédé (100) selon l'une quelconque des revendications 1 à 3, comprenant en outre la détermination (S108) d'une action à exécuter, sur la base des données indicatives de l'anomalie ;
le signal de notification indique en outre l'action à effectuer.

5. Procédé (100) selon l'une quelconque des revendications 1 à 4, dans lequel l'anomalie identifiée est une fissure ou un trou (504), et l'anomalie est identifiée comme une région dans les données d'image ayant une intensité dépassant une première valeur de seuil.

6. Procédé (100) selon l'une quelconque des revendications 1 à 5, comprenant en outre la détermination (S110) d'une position de l'anomalie détectée, par rapport à la membrane du dispositif d'ouverture (304) ;
le signal de notification indique en outre la position déterminée de l'anomalie détectée.

7. Procédé (100) selon l'une quelconque des revendications 1 à 6, comprenant en outre la détermination (S112) d'une épaisseur estimée d'une membrane (414) du dispositif d'ouverture (304) sur la base d'une échelle de gris des données d'image, dans lequel la membrane (414) est une ligne d'affaiblissement définissant une périphérie d'une partie centrale principale (408) du dispositif d'ouverture (304) ;
le signal de notification indique en outre l'épaisseur estimée de la membrane (414).

8. Procédé (100) selon l'une quelconque des revendications 1 à 7, dans lequel la partie centrale principale (408) est définie par la membrane (414), dans lequel la membrane (414) est formée par un premier moule d'un agencement de moule, et une partie centrale intérieure (420) est définie par un évidement (416), l'évidement (416) étant formé par un deuxième moule de l'agencement de moule, l'anomalie étant identifiée comme une déviation d'un placement de la membrane (414) par rapport à un placement de l'évidement (416) par rapport à un placement de référence de la membrane (414) par rapport à un placement de référence de l'évidement (416).

9. Procédé (100) selon l'une quelconque des revendications 1 à 8, dans lequel les données d'image sont associées à un paquet à former, et
La communication (S114) du signal de notification comprend en outre la communication d'un identificateur de paquet du paquet associé aux données d'image.

10. Procédé (100) selon l'une quelconque des revendications 1 à 9, dans lequel l'anomalie identifiée est une particule carbonisée, et l'anomalie est identifiée comme une région dans les données d'image ayant une intensité inférieure à une deuxième valeur de seuil.

11. Procédé (100) selon l'une quelconque des revendications 1 à 10, dans lequel, une fois que la bande de matériau d'emballage (302) est formée en emballages, le premier côté (310a) est agencé pour faire face à un environnement environnant et le deuxième côté (310b) est agencé pour faire face à un produit alimentaire maintenu à l'intérieur des emballages.

12. Procédé (100) selon l'une quelconque des revendications 1 à 11, dans lequel le dispositif d'ouverture (304) comprend la membrane (414) définissant la périphérie de la partie centrale principale (408), et dans lequel le signal de notification comprend des informations indiquant si l'anomalie provient de la membrane (414) et/ou de la partie centrale principale (408).

13. Procédé (100) selon l'une quelconque des revendications 1 à 12, dans lequel l'anomalie identifiée est un déplacement d'un bord périphérique d'une bride intérieure (412) du dispositif d'ouverture (304).

14. Kit de pièces pour détecter des anomalies dans un dispositif d'ouverture moulé par injection (304) sur une bande (302) de matériau d'emballage, dans lequel le dispositif d'ouverture (304) est moulé par injection sur la bande dans un poste de moulage par injection (312), ledit kit de pièces comprenant
une source lumineuse (308) configurée pour émettre de la lumière traversant le dispositif d'ouverture (304),
un dispositif de capture d'image (306) configuré pour capturer la lumière traversant le dispositif d'ouverture (304) et, sur la base de la lumière capturée, générer des données d'image représentant le dispositif d'ouverture, et
dispositif de traitement de données (200), comprenant un processeur (204), une mémoire (208) et un émetteur-récepteur (206), configuré pour identifier, dans les données d'image, des données indicatives d'une anomalie selon le procédé de détection d'anomalies selon l'une quelconque des revendications 1 à 13, et pour communiquer, en réponse à l'anomalie identifiée, un signal de notification comprenant des informations indicatives de l'anomalie à une station de contrôle de qualité (316).

15. L'invention concerne un dispositif de traitement de données (200) comprenant un circuit de commande (202) configuré pour
recevoir des données d'image représentant un dispositif d'ouverture moulé par injection (304), dans lequel les données d'image sont générées en capturant la lumière passant à travers le dispositif d'ouverture moulé par injection (304) selon le procédé de détection d'anomalies selon l'une quelconque des revendications 1 à 13,
identifier, dans les données d'image, des données indiquant une anomalie du dispositif d'ouverture (304), et
communiquer, en réponse à l'anomalie identifiée, un signal de notification comprenant des informations indicatives de l'anomalie à une station de contrôle qualité (316).
